# EUROPÄISCHE PATENTSCHRIFT

(11) **EP 2 739 967 B1**
(45) Veröffentlichungstag und Bekanntmachung des Hinweises auf die Patenterteilung: **01.06.2016**
(21) Anmeldenummer: 12727862.0
(22) Anmeldetag: 15.06.2012
(51) Int. Cl.: G01N 30/60, G01N 30/56

(54) **LATERAL DURCHSTRÖMTES CHROMATOGRAPHIEELEMENT**
CHROMATOGRAPHY ELEMENT WITH LATERAL FLOW
ÉLÉMENT DE CHROMATOGRAPHIE AVEC CIRCULATION DE FLUIDE LATÉRALE

(30) Priorität: 05.08.2011 DE 102011080527
(43) Veröffentlichungstag der Anmeldung: 11.06.2014
(73) Patentinhaber: Robert Bosch GmbH, 70442 Stuttgart (DE)
(72) Erfinder: ROTHACHER, Peter, 76646 Bruchsal (DE)
(86) Internationale Anmeldenummer: PCT/EP2012/061402
(87) Internationale Veröffentlichungsnummer: WO 2013/020743

(56) Entgegenhaltungen:
- DE-A1-102009 052 234
- US-A1- 2003 217 923
- US-A1- 2009 255 601
- QING HE ET AL: "Ion liquid chromatography on-a-chip with beads-packed parylene column", MICRO ELECTRO MECHANICAL SYSTEMS, 2004. 17TH IEEE INTERNATIONAL CONFER ENCE ON. (MEMS) MAASTRICHT, NETHERLANDS 25-29 JAN. 2004, PISCATAWAY, NJ, USA,IEEE, US, 25. Januar 2004 (2004-01-25), Seiten 212-215, XP010767863, DOI: 10.1109/MEMS.2004.1290560 ISBN: 978-0-7803-8265-7

## Beschreibung

### Stand der Technik

Die vorliegende Erfindung betrifft ein mikrofluides Chromatographieelement sowie deren Verwendung in mikrofluiden Systemen.

Über die vergangenen Jahre haben sich mikrofluide Systeme immer mehr in der chemischen, biochemischen und medizinischen Forschung und Diagnostik etabliert. Dabei bieten insbesondere sogenannte mikro-Totalanalysesysteme (µ Total Analysis System, µ TAS) den Vorteil, dass einzelne Arbeitsschritte zusammengefasst, automatisiert und gleichzeitig auf einen Mikromaßstab reduziert werden können.

Als fester Bestandteil biochemischer Untersuchungen ist die Polymerase-Chain-Reaction (PCR) etabliert und erlaubt die Amplifizierung von Nukleinsäuren, um sie in detektionsfähigen Mengen zugänglich zu machen. Bei vielen Abläufen ist dabei eine Reinigung der zu amplifizierenden oder amplifizierten DNA notwendig. Dazu werden derzeit verschiedene Produkte z.B. als Kit oder Filter-Systeme angeboten. Gemeinsam ist diesen Produkten das chromatographische Grundprinzip, bei dem die Verunreinigungen enthaltende Lösung mit der gesuchten Nukleinsäure, die auch als mobile Phase bezeichnet wird, über eine stationäre Festphase geleitet wird, an der die Nukleinsäure adsorbiert wird. Mit verschiedenen Lösungen werden anschließend weniger gut adsorbierte Verunreinigungen eluiert. Anschließend wird mit einer weiteren mobilen Phase gezielt die Nukleinsäure eluiert.

Als stationäre Phasen werden hierzu Silica-Fasern, Silica-Gel, AluminiumoxidFasern, Aluminiumoxid-Gel oder Anionenaustauscher verwendet. Bei Anionenaustauschern wird mit konzentrierten Salzlösungen eluiert. Etabliert haben sich daher hauptsächlich Silica-Faser-Säulen, durch die die mobilen Phasen mittels Zentrifugation bewegt werden.

US 2008/0277356 offenbart eine mikrofluide Vorrichtung, die nach dem chromatographischen Prinzip arbeitet. Dazu wird eine Kanalstruktur für die mobile Phase schichtweise über eine Filterebene gelegt, so dass durch den Mehrschichtaufbau ein transversal durchströmtes Filterelement entsteht. Ein ähnlicher mehrschichtiger, transversal durchströmter Filteraufbau ist aus US 2002/0185431 bekannt. In der aus mehreren Schichten bestehenden Vorrichtung gemäß WO 2004/065010 wird ein Membranfilter verwendet. Auch das Hintereinanderschalten mehrerer stationärer Phasen als separate Sektionen ist z.B. aus EP 1916522 bekannt.

Die Dokumente Qing et al "ION LIQUID CHROMATOGRAPHY ON-A-CHIP WITH BEADS-PACKED PARYLENE COLUMN" und US 2003/217923 A1 sind mikrofluidische Chromatographieelemente bekannt.

Gegenstand der vorliegenden Erfindung ist somit ein mikrofluides Chromatographieelement mit folgenden Bestandteilen:
- eine Befüllöffnung zum Befüllen mit einer stationären Phase,
- einen sich an die Befüllöffnung anschließenden Hohlraum zur Aufnahme der stationären Phase
- mindestens einen fluiden Zulauf für eine mobile Phase,
- mindestens einen fluiden Ablauf für Fraktionen der mobilen Phase,
- im fluiden Zulauf und im fluiden Ablauf angeordnete Rückhaltestrukturen für die stationäre Phase,
wobei alle Bestandteile in einer Ebene angeordnet sind und die mobile Phase die stationäre Phase lateral durchströmt.

Hierdurch wird das Verfahren in ein entsprechendes System übersetzt, welches in einen flachen mikrofluiden Biochip integrierbar ist.

Als stationäre Phase wird dabei die Phase bezeichnet, die mit den einzelnen Substanzen des Substanzgemisches, d.h. der mobilen Phase, in Wechselwirkung tritt. Umgekehrt wird als mobile Phase das fluide Substanzgemisch bezeichnet, das die stationäre Phase durchläuft.

In diesem Zusammenhang bedeutet in einer Ebene angeordnet, dass alle Bestandteile des mikrofluiden Chromatographieelements nebeneinander und nicht in unterschiedlichen Schichten angeordnet sind. Da hierzu auch die Zu- und Abläufe der mobilen Phase sowie die dazwischenliegende stationäre Phase gehören, durchläuft die mobile Phase die stationäre Phase lateral und nicht transversal. Somit kann auf bei transversal durchströmten Elementen notwendige Durchgangslöcher und weitere Fluidikebenen verzichtet werden.

In einer bevorzugten Ausführungsform des mikrofluiden Chromatographieelements sind die Bestandteile in einer Ebene eines strukturierten Elements angeordnet. Das strukturierte Element besteht insbesondere aus einem mittels Spritzguss, Fräsen, Tiefziehen oder Heißprägen strukturierten Kunststoffformteil. Hierfür kommen verschiedene Polymere in Frage, die sich thermoverformen oder pressen lassen und inert gegenüber den unterschiedlichen stationären und mobilen Phasen sind. Da das strukturierte Element auch in mikrofluiden Lab on Chip-Systemen verwendet wird, kann das Element selbst als Chip bezeichnet werden.

In einer weiteren bevorzugten Ausführungsform weist das strukturierte Element des mikrofluiden Chromatographieelements einen flächig sitzenden, dicht schließenden Deckel auf. Dieser kann aus dem gleichen Material wie das strukturierte Element gefertigt sein. Alternativ ist jedoch auch ein einteiliger Aufbau des mikrofluiden Chromatographieelements möglich.

Das mikrofluide Chromatographieelement verfügt außerdem über Rückhaltestrukturen, die in einer besonderen Ausführungsform Zinken, Spalten, Schlitze, Poren und/oder Perforationen aufweisen, deren Durchlass kleiner als die kleinsten Partikel der stationären Phase sind. Wie die Bezeichnung schon sagt, ist die Funktion der Rückhaltestrukturen das zuverlässige Zurückhalten von Partikeln der stationären Phase im Hinblick auf den Zulauf und den Ablauf der mobilen Phase. Somit sind je nach Schüttung der stationären Phase die Rückhaltestrukturen anzupassen. Die Rückhaltestrukturen befinden sich im fluiden Zulauf und im fluiden Ablauf zur stationären Phase. Als solches können sie baugleich ausgeführt sein oder aber unterschiedlich sein, sofern die Partikel der stationären Phase zuverlässig im Zulauf und im Ablauf der mobilen Phase zurückgehalten werden. Als stationäre Phase eignen sich verschiedene partikuläre Komponenten. Bevorzugt werden Komponenten mit einem Partikeldurchmesser von 20 bis 60 µm, z.B. Silicagel 60 der Firma Merck. Die Neue Beschreibungsseite 4

Rückhaltestrukturen weisen entsprechend geringere Abstände auf. So weisen die Rückhaltestrukturen bei Silicagel 60 als stationäre Phase Spalten von ca. 50 µm auf.

In einer besonderen Ausführungsform sind die Rückhaltestrukturen mikrogefräst, geprägt, spritzgegossen, aus Polymeren mittels Laser ablatiert oder 3D-lithographiert, porosifiziert oder porös. Dabei kann die Rückhaltestruktur aus dem gleichen Material wie das strukturierte Element geformt sein oder aber aus einem anderen Material, das mit dem strukturierten Element verbunden wird.

Prinzipiell eignet sich für die stationäre Phase jedes Material, dass als partikuläre Schüttung zur chromatographischen Trennung, Reinigung und/oder Identifikation sowie für Ionenaustauschprozesse bekannt ist und sich auf lateral durchströmte mikrofluide Systeme anwenden lässt.

Erfindungsgemäß ist die stationäre Phase des mikrofluiden Chromatographieelements ausgewählt aus Siliciumdioxid, Aluminiumoxid, Titandioxid oder Zeolite oder organischen Materialien und liegt in Form von Partikeln, Pulver, Gel, Fasern und/oder Kügelchen mit einem den Begrenzungen des Hohlraums angepassten Schüttwinkel vor.

In einer weiteren bevorzugten Ausführungsform ist die stationäre Phase des mikrofluiden Chromatographieelements ausgewählt aus Biopolymeren, besonders bevorzugt quervernetzten Agarosen.

In einer weiteren bevorzugten Ausführungsform des mikrofluiden Chromatographieelements sind an die stationäre Phase biochemische Bestandteile, vorzugsweise rekombinante Bibliotheken von Antikörpern, Enzymen oder auf der Oberfläche von Bakteriophagen präsentierte Proteine, gekoppelt und werden so immobilisiert.

### Neue Beschreibungsseite 4a

Unter Schüttwinkel der stationären Phase versteht man dabei den Winkel bis zu dem das partikelförmige Material der stationären Phase belastet werden kann, ohne abzurutschen oder zusammenzubrechen. Der Schüttwinkel hängt dabei von den spezifischen Eigenschaften des Materials der stationären Phase, insbesondere der Art, Kohäsivität, Polarität, Feuchte, etc. ab. Wie bereits erwähnt sind die Begrenzungen des Hohlraums im mikrofluiden Chromatographieelements an den Schüttwinkel der stationären Phase angepasst. Das bedeutet umgekehrt, dass bei der Wahl der stationären Phase die Abmessungen des Hohlraums berücksichtigt werden müssen. Unter Zuhilfenahme des Winkels, der durch die Begrenzung des Hohlraums und den Querschnitt durch die Befüllöffnung gebildet wird, ist dieser Winkel im Idealfall gleich dem Schüttwinkel der stationären Phase. Daher ist in einer bevorzugten Ausführungsform der durch die Begrenzung des Hohlraums und den Querschnitt der Befüllöffnung gebildete Winkel größer oder gleich dem Schüttwinkel der stationären Phase. Der gefüllte Hohlraum ist dann die eigentliche chromatographische Säule.

In einer weiteren Ausführungsform des mikrofluiden Chromatographieelements ist die Befüllöffnung für die stationäre Phase im Verhältnis zum Hohlraum, d.h. der eigentlichen chromatographischen Säule, als kurze Kanalstruktur ausgeformt. Dadurch wird verhindert, dass bei der bestimmungsgemäßen Anwendung kein großes undurchströmtes Totvolumen entsteht. Auch in diesem Zusammenhang ist es wichtig, dass der Winkel, der durch die Begrenzung der Säule und den Querschnitt der Befüllöffnung gebildet wird, nicht flacher als der Schüttwinkel der stationären Phase sein darf bzw. die Abmessungen des Hohlraums entsprechend angepasst werden müssen. Die Öffnung muss, zumindest beim Befüllen mit der stationären Phase, nach oben zeigen, damit die Partikel ungehindert in den Hohlraum der Säule gelangen können. Zum Befüllen mit der stationären Phase wird das Chromatographieelement vorzugsweise hochkant gestellt oder schräg geneigt. Optional kann während des Befüllvorgangs die Schüttung mittels Vibrationen oder Stößen verdichtet werden, so dass auch stationäre Phasen mit einem Schüttwinkel möglich werden., der kleiner ist als der zwischen Begrenzung des Hohlraums und Querschnitt der Befüllöffnung gebildete Winkel. Mit diesen Techniken können sehr dicht gepackte Säulen ohne Totvolumina oder Bypässe hergestellt werden, was wiederrum zu einer enormen Kostenersparnis führt, da kostengünstige Partikelschüttungen bislang nicht in mikrofluiden Systemen eingesetzt werden konnten. Auch auf wesentlich teurere magnetische Partikel (magnetic beads) kann so verzichtet werden.

In einer weiteren Ausführungsform wird die Befüllöffnung nach dem Befüllen durch Verkleben, vorzugsweise mit Klebefolie, Heißkleber oder Flüssigkleber; Heißversiegeln, vorzugsweise mit einem heißen Stempel; Laserschweißen oder mechanische Verschlussmittel, vorzugsweise mit einem Pfropfen oder Stöpsel, verschlossen. So kann sich die Schüttung auch beim Transport des Chips nicht mehr bewegen.

Durch die einfache Integration des mikrofluiden Chromatographieelements ist es für viele Anwendungen geeignet. Dabei steht jedoch die Verwendung in druck- oder zentrifugalgetriebenen mikrofluiden Systemen, insbesondere mikro-Totalanalysesystemen, im Vordergrund, wobei auf die Reinigung, Trennung und/oder auf den Einsatz in Ionenaustauschprozessen abgezielt wird. Der Einsatz erfolgt meistens im Überdruckbereich von wenigen Millibar bis ca. ein halben bar. Weitere spezielle Verwendungen ergeben sich bei der Entwicklung von Lab on Chip Systemen, z.B. zur Identifikation oder Resistenzbestimmung von Bakterien, zur biochemischen Trennung und/oder Reinigung oder ganz Allgemein in der Entwicklung von Healthcare und Diagnostik Produkten.

### Zeichnungen

Weitere Vorteile und vorteilhafte Ausgestaltungen der erfindungsgemäßen Vorrichtung werden durch die Abbildungen veranschaulicht und in der nachfolgenden Beschreibung erläutert. Dabei ist zu beachten, dass die Abbildungen nur beschreibenden Charakter haben und nicht dazu gedacht sind, die Erfindung in irgendeiner Form einzuschränken. In den Abbildungen werden folgende Bezugszeichen verwendet:

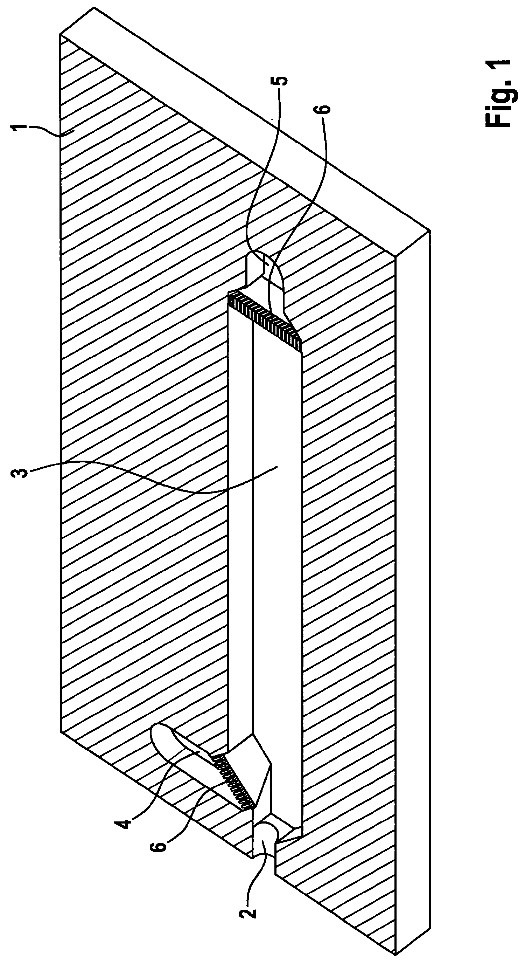

Fig. 1 zeigt einen schematischen Aufriss eines mikrofluiden Chromatographieelements 1. An eine Befüllöffnung 2 schließt sich ein Hohlraum 3 zur Aufnahme einer stationären Phase an. Ein fluider Zulauf 4 der mobilen Phase wird durch eine erste Rückhaltestruktur 6 vom Hohlraum 3 abgegrenzt. An den Hohlraum 3 schließt sich ein fluider Ablauf 5 an, der ebenfalls durch eine zweite Rückhaltestruktur 6 zum Hohlraum 3 abgegrenzt wird. Alle Bestandteile zur Aufnahme der mobilen und der stationären Phase befinden sich dabei in einer Ebene, die lediglich durch die Rückhaltestrukturen 6 unterbrochen wird.

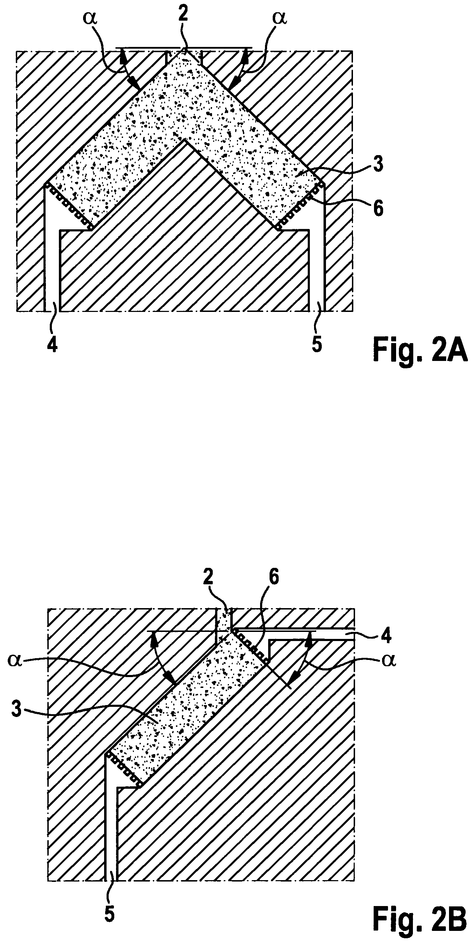

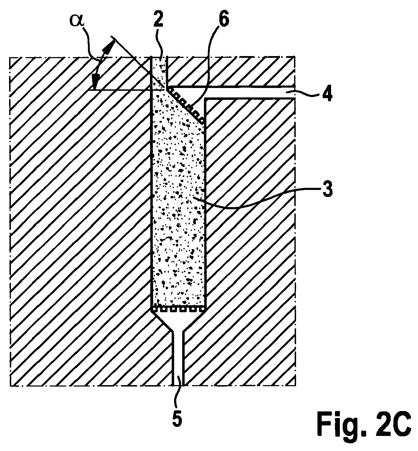

Fig. 2A, B und C zeigen schematisch das Prinzip und drei unterschiedliche Alternativen im Aufbau des mikrofluiden Chromatographieelements 1. Über die Befüllöffnung 2 wird der Hohlraum 3 mit einer Schüttung ausgefüllt. Der fluide Zulauf 4 und der fluide Ablauf 5 werden durch die Rückhaltestrukturen 6 vom Hohlraum 3 abgegrenzt. Ein Winkel α, der durch die Begrenzung des Hohlraums 3 und den Querschnitt durch die Befüllöffnung 2 eingeschlossen wird, verdeutlicht die Orientierung der bei der Befüllung nach oben zeigenden Begrenzung der Säule. In Fig. 2A ist diese Begrenzung des Hohlraums 3 durch die Wand der Säule gegeben. In Fig. 2B wird diese Begrenzung einerseits durch die Wand der Säule und andererseits durch die Rückhaltestruktur 6 definiert. In
Fig. 2C begrenzt die Rückhaltestruktur 6 den Hohlraum 3. Der Aufbau des mikrofluidischen Chromatographieelements 1 ist so ausgebildet, dass der Winkel α derart an den Schüttwinkel der stationären Phase angepasst ist, dass der Winkel α größer oder gleich dem Schüttwinkel ist.

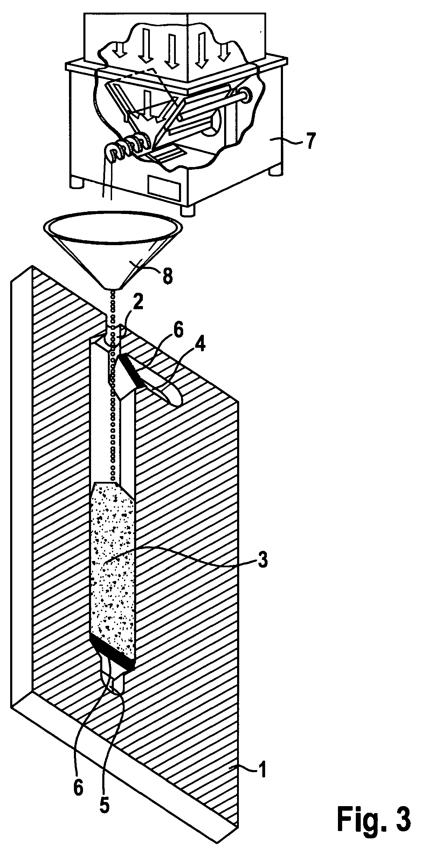

Fig. 3 zeigt eine schematische Darstellung der Befüllung eines auf der Seite stehenden mikrofluiden Chromatographieelements 1. Mit einer Dosiereinrichtung 7, z.B. einem Schneckendosierer, wird die stationäre Phase über einen Trichter 8 und die Befüllöffnung 2 in den Hohlraum 3 eingefüllt. Die Rückhaltestrukturen 6 verhindern die Ausbreitung der stationären Phase in den fluiden Zulauf 4 und den fluiden Ablauf 5 der mobilen Phase. Durch Vibrationen des Chromatographieelements 1 kann die Schüttung zusätzlich verdichtet werden. Anschließend wird die Befüllöffnung 2 mit einem heißen Stempel verquetscht. Im Anschluss kann das mikrofluide Chromatographieelement 1 in ein mikrofluides System integriert werden. Über den fluiden Zulauf 4 wird die mobile Phase zugeführt, die die stationäre Phase lateral durchläuft und anschließend in Fraktionen über den fluiden Ablauf 6 die Säule verlässt.

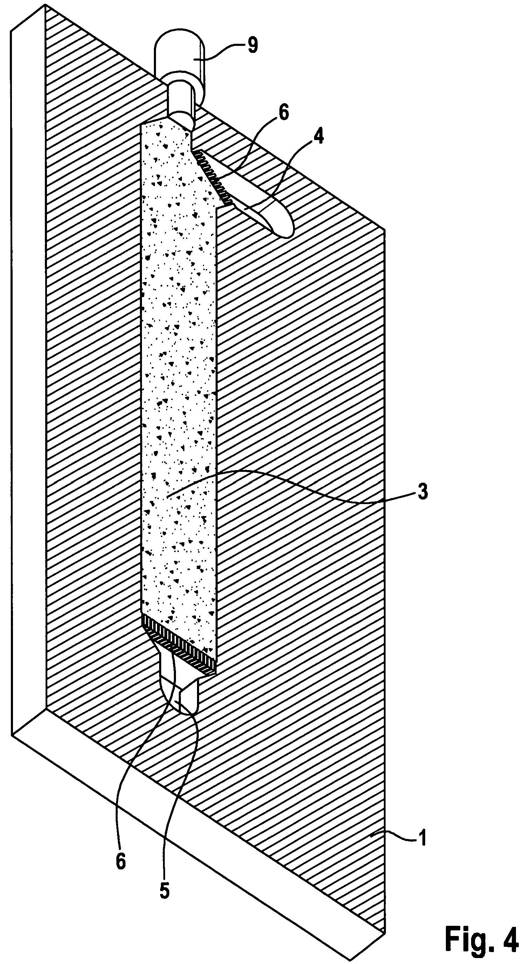

Fig. 4 zeigt ein mit der stationären Phase befülltes mikrofluides Chromatographieelement 1, das mit einem Stöpsel 9 verschlossen bzw. versiegelt ist. An die Befüllöffnung 2 schließt sich der mit der stationären Phase ausgefüllte Hohlraum 3 an. Der fluide Zulauf 4 und der fluide Ablauf 5 werden durch Rückhaltestrukturen 6 vom Hohlraum 3 abgegrenzt. Alle Bestandteile zur Aufnahme der mobilen und der stationären Phase befinden sich in einer Ebene, die lediglich durch die Rückhaltestrukturen 6 unterbrochen wird.

## Patentansprüche

1. Mikrofluides Chromatographieelement (1), aufweisend die folgenden Bestandteile:
- eine Befüllöffnung (2) zum Befüllen mit einer stationären Phase,
- einen sich an die Befüllöffnung (2) anschließenden Hohlraum (3) zur Aufnahme der stationären Phase
- mindestens einen fluiden Zulauf (4) für eine mobile Phase,
- mindestens einen fluiden Ablauf (5) für Fraktionen der mobilen Phase,
- im fluiden Zulauf (4) und im fluiden Ablauf (5) angeordnete Rückhaltestrukturen (6) für die stationäre Phase,
wobei alle Bestandteile in einer Ebene angeordnet sind und die mobile Phase die stationäre Phase lateral durchströmt, **dadurch gekennzeichnet, dass** die stationäre Phase ausgewählt ist aus anorganischen oder organischen Materialien und in Form von Partikeln, Pulver, Gel, Fasern und/oder Kügelchen mit einem den Begrenzungen des Hohlraums (3) angepassten Schüttwinkel vorliegt.

2. Mikrofluides Chromatographieelement (1) nach Anspruch 1, **dadurch gekennzeichnet, dass** die Bestandteile in einer Ebene eines strukturierten Elements angeordnet sind.

3. Mikrofluides Chromatographieelement (1) nach Anspruch 2, **dadurch gekennzeichnet, dass** das strukturierte Element einen flächig sitzenden dicht schließenden Deckel aufweist.

4. Mikrofluides Chromatographieelement (1) nach einem der Ansprüche 1 bis 3, **dadurch gekennzeichnet, dass** die Rückhaltestrukturen (6) Zinken, Spalten, Schlitze, Poren und/oder Perforationen aufweisen, deren Durchlass kleiner als die kleinsten Partikel der stationären Phase sind.

5. Mikrofluides Chromatographieelement (1) nach einem der Ansprüche 1 bis 4, **dadurch gekennzeichnet, dass** die Rückhaltestrukturen (6) mikrogefräst, geprägt, spritzgegossen, aus Polymeren mittels Laser ablatiert oder 3D-lithographiert, porosifiziert oder porös sind.

6. Mikrofluides Chromatographieelement (1) nach einem der Ansprüche 1 bis 5, **dadurch gekennzeichnet, dass** an die stationäre Phase biochemische Bestandteile, vorzugsweise rekombinante Bibliotheken von Antikörpern, Enzymen oder auf der Oberfläche von Bakteriophagen präsentierte Proteine, gekoppelt sind.

7. Mikrofluides Chromatographieelement (1) nach einem der Ansprüche 1 bis 5, **dadurch gekennzeichnet, dass** der durch die Begrenzung des Hohlraums (3) und den Querschnitt der Befüllöffnung (2) gebildete Winkel größer oder gleich dem Schüttwinkel der stationären Phase ist.

8. Mikrofluides Chromatographieelement (1) nach einem der Ansprüche 1 bis 7, **dadurch gekennzeichnet, dass** die Befüllöffnung (2) im Verhältnis zum Hohlraum (3) als kurze Kanalstruktur ausgeformt ist.

9. Mikrofluides Chromatographieelement (1) nach einem der Ansprüche 1 bis 8, **dadurch gekennzeichnet, dass** die Befüllöffnung (2) nach dem Befüllen durch Verkleben, vorzugsweise mit Klebefolie, Heißkleber oder Flüssigkleber; Heißversiegeln, vorzugsweise mit einem heißen Stempel; Laserschweißen oder mechanische Verschlussmittel, vorzugsweise mit Pfropfen oder Stöpsel (9), verschlossen wird.

10. Verwendung eines mikrofluiden Chromatographieelements (1) nach einem der Ansprüche 1 bis 9 in einem druck- oder zentrifugalgetriebenen mikrofluiden System, insbesondere einem mikro-Totalanalysesystem, zur Reinigung, Trennung und/oder im Rahmen von Ionenaustauschprozessen.

## Claims

1. Microfluidic chromatography element (1), having the following components:
- a filling opening (2) for filling with a stationary phase,
- a cavity (3), which adjoins the filling opening (2) and receives the stationary phase,
- at least one fluid inlet (4) for a mobile phase,
- at least one fluid outlet (5) for fractions of the mobile phase,
- retaining structures (6) for the stationary phase, which are arranged in the fluid inlet (4) and in the fluid outlet (5),
wherein all the components are arranged in one plane and the mobile phase flows laterally through the stationary phase, **characterized in that** the stationary phase is chosen from inorganic or organic materials and is present in the form of particles, powder, gel, fibres and/or pellets with an angle of repose adapted to the boundaries of the cavity (3).

2. Microfluidic chromatography element (1) according to Claim 1, **characterized in that** the components are arranged in one plane of a structured element.

3. Microfluidic chromatography element (1) according to Claim 2, **characterized in that** the structured element has a tightly fitting cover that lies flat thereon.

4. Microfluidic chromatography element (1) according to one of Claims 1 to 3, **characterized in that** the retaining structures (6) have teeth, gaps, slits, pores and/or perforations, of which the through-openings are smaller than the smallest particles of the stationary phase.

5. Microfluidic chromatography element (1) according to one of Claims 1 to 4, **characterized in that** the retaining structures (6) are micro-milled, stamped, injection-moulded, ablated from polymers by laser or 3D-lithographed, are rendered porous or are porous.

6. Microfluidic chromatography element (1) according to one of Claims 1 to 5, **characterized in that** biochemical components, preferably recombinant libraries of antibodies, enzymes or proteins presented on the surface of bacteriophages, are coupled to the stationary phase.

7. Microfluidic chromatography element (1) according to one of Claims 1 to 5, **characterized in that** the angle formed by the boundary of the cavity (3) and by the cross section of the filling opening (2) is greater than or equal to the angle of repose of the stationary phase.

8. Microfluidic chromatography element (1) according to one of Claims 1 to 7, **characterized in that** the filling opening (2) is formed as a short channel structure in relation to the cavity (3).

9. Microfluidic chromatography element (1) according to one of Claims 1 to 8, **characterized in that**, after the filling procedure, the filling opening (2) is closed by adhesive bonding, preferably with adhesive film, hot-melt adhesive or liquid adhesive; heat-sealing, preferably with a hot stamp; laser welding, or mechanical closure means, preferably with plugs or stoppers (9).

10. Use of a microfluidic chromatography element (1) according to one of Claims 1 to 9 in a pressure-driven or centrifugally driven microfluidic system, in particular a micro total analysis system, for purification, separation and/or in the context of ion exchange processes.

## Revendications

1. Élément chromatographique microfluide (1), comprenant les constituants suivants :
- une ouverture de remplissage (2) pour le remplissage avec une phase stationnaire,
- une cavité (3) raccordée à l'ouverture de remplissage (2), pour la réception de la phase stationnaire,
- au moins une entrée fluide (4) pour une phase mobile,
- au moins une sortie fluide (5) pour des fractions de la phase mobile,
- des structures de rétention (6) pour la phase stationnaire, agencées dans l'entrée fluide (4) et dans la sortie fluide (5),
tous les constituants étant agencés dans un plan et la phase mobile traversant latéralement la phase stationnaire, **caractérisé en ce que** la phase stationnaire est choisie parmi les matériaux inorganiques ou organiques, et se présente sous la forme de particules, de poudres, de gels, de fibres et/ou de billes avec un angle de garnissage adapté aux limites de la cavité (3).

2. Élément chromatographique microfluide (1) selon la revendication 1, **caractérisé en ce que** les constituants sont agencés dans un plan d'un élément structuré.

3. Élément chromatographique microfluide (1) selon la revendication 2, **caractérisé en ce que** l'élément structuré comprend un couvercle étanche reposant à plat.

4. Élément chromatographique microfluide (1) selon l'une quelconque des revendications 1 à 3, **caractérisé en ce que** les structures de rétention (6) comprennent des dents, des fentes, des fissures, des pores et/ou des perforations, dont le passage est inférieur aux plus petites particules de la phase stationnaire.

5. Élément chromatographique microfluide (1) selon l'une quelconque des revendications 1 à 4, **caractérisé en ce que** les structures de rétention (6) sont microfraisées, gravées, moulées par injection, soumises à une ablation par un laser à partir de polymères ou lithographiées en 3D, porosifiées ou poreuses.

6. Élément chromatographique microfluide (1) selon l'une quelconque des revendications 1 à 5, **caractérisé en ce que** des constituants biochimiques sont couplés à la phase stationnaire, de préférence des bibliothèques recombinantes d'anticorps, des enzymes ou des protéines présentées sur la surface de bactériophages.

7. Élément chromatographique microfluide (1) selon l'une quelconque des revendications 1 à 5, **caractérisé en ce que** l'angle formé par la limite de la cavité (3) et la section de l'ouverture de remplissage (2) est supérieur ou égal à l'angle de garnissage de la phase stationnaire.

8. Élément chromatographique microfluide (1) selon l'une quelconque des revendications 1 à 7, **caractérisé en ce que** l'ouverture de remplissage (2) est configurée sous la forme d'une structure de canal courte par rapport à la cavité (3).

9. Élément chromatographique microfluide (1) selon l'une quelconque des revendications 1 à 8, **caractérisé en ce que** l'ouverture de remplissage (2) est fermée après le remplissage par collage, de préférence avec un film adhésif, une colle chaude ou une colle liquide ; scellement à chaud, de préférence avec un poinçon chaud ; soudage laser ou par des moyens de fermeture mécaniques, de préférence avec un bouchon ou un tampon (9).

10. Utilisation d'un élément chromatographique microfluide (1) selon l'une quelconque des revendications 1 à 9 dans un système microfluide à entraînement par la pression ou centrifuge, notamment un microsystème d'analyse totale, pour la purification, la séparation et/ou dans le cadre de procédés d'échange d'ions.
